# EUROPEAN PATENT APPLICATION

(11) **EP 4 751 882 A1**
(43) Date of publication of application: **03.06.2026**
(21) Application number: 24855212.7
(22) Date of filing: 06.02.2024
(51) Int. Cl.: B29C 64/20, B29C 64/35, B33Y 40/00, B29C 67/00, B29C 64/209, B29C 37/00

(54) **HEATED BED OF 3D PRINTER AND 3D PRINTER**

(30) Priority: 24.08.2023 CN 202322315142 U
(71) Applicant: Shenzhen Tuozhu Technology Co., Ltd., Shenzhen, Guangdong 518000 (CN)
(72) Inventor: DONG, Qun, Shenzhen, Guangdong 518000 (CN); HUANG, Hongsheng, Shenzhen, Guangdong 518000 (CN); CHEN, Zihan, Shenzhen, Guangdong 518000 (CN)
(74) Representative: Grünecker Patent- und Rechtsanwälte PartG mbB
(86) International application number: PCT/CN2024/076269
(87) International publication number: WO 2025/039478

(57) **Abstract**

Disclosed in the present application are a heated bed of a 3D printer and the 3D printer. The heated bed is arranged on the side of a base of the 3D printer facing a nozzle of the 3D printer, and the heated bed is slidably connected to the base, wherein a first nozzle wiping device is arranged in the heated bed. By means of implementing the present application, the manual removal of residual consumables can be avoided, thereby effectively reducing the risk that a user is scalded when the residual consumables are wiped off of the nozzle.

## Description

The present application claims priority to Chinese Patent Application No. 202322315142.4, filed with the China National Intellectual Property Administration on August 24, 2023 and entitled "HOT BED DEVICE FOR 3D PRINTER AND 3D PRINTER", the content of which is incorporated herein by reference in its entirety.

### TECHNICAL FIELD

The present application relates to the technical field of 3D printing, and in particular to a hot bed device for a 3D printer and the 3D printer.

### BACKGROUND

A 3D printer, also known as a three-dimensional printer or a stereoscopic printer, is a process equipment for rapid prototyping. The 3D printing technology that can be currently adopted by a 3D printer is fused deposition modeling (FDM). FDM is a technology based on digital models for constructing three-dimensional objects using materials like powdered metal or plastic through layer-by-layer printing. In a specific implementation, in a 3D printer adopting the FDM technology, hot melt filamentous materials (also referred to as consumables) are supplied to a nozzle by a feeding device, and the consumables are heated to a molten state in the nozzle. The nozzle can extrude the consumables in a molten state to a printing panel while moving along a printing path of the three-dimensional printer, and a three-dimensional object can be printed layer by layer.

Therefore, residual consumables are present around the nozzle, and long-term accumulation of these residual consumables causes the residual consumables to stick to the surface of a printed object during printing, resulting in defects in the printed object. In the prior art, residual consumables are manually removed after the residual consumables are softened by heating the nozzle, resulting in low removal efficiency of residual consumables around the nozzle and the risk of burning users.

### SUMMARY

The present application provides a hot bed device for a 3D printer and the 3D printer, which can improve the removal efficiency of residual consumables around a nozzle and ensures high safety.

In a first aspect, embodiments of the present application provide a hot bed device for a 3D printer. The hot bed device is arranged on a side of a base of the 3D printer facing a nozzle of the 3D printer, and the hot bed device is slidably connected to the base; where
the hot bed device is provided with a first nozzle wiping device, and the first nozzle wiping device is configured to wipe off residual consumables around the nozzle when in contact with the nozzle.

In the embodiments of the present application, by arrangement of a nozzle wiping device in a hot bed device, the nozzle wiping device can be used to wipe off residual consumables around the nozzle, avoiding manual removal of the residual consumables, effectively improving the removal efficiency of the residual consumables around the nozzle, and ensuring high safety.

With reference to the first aspect, in a first possible implementation, the nozzle is conical in shape, and the first nozzle wiping device is configured to wipe off residual consumables on a conical side surface portion of the nozzle. By implementing the embodiments of the present application, the first nozzle wiping device can realize cleaning of the conical side surface portion of the nozzle, thereby improving the cleaning efficiency of the nozzle.

With reference to the first aspect or with reference to the first possible implementation of the first aspect, in a second possible implementation, the hot bed device is further provided with a power port, and the first nozzle wiping device and the power port are located on a same side of the hot bed device. By implementing the embodiments of the present application, only one side edge of the hot bed device needs to be processed during production, which improves the production efficiency of the hot bed device, and achieves a reasonable and beautiful layout.

With reference to the first aspect or with reference to any one of the above possible implementations of the first aspect, in a third possible implementation, the nozzle is conical in shape; the hot bed device is further provided with a second nozzle wiping device, and the second nozzle wiping device is configured to wipe off residual consumables at a conical tip portion of the nozzle when in contact with the nozzle. By implementing the embodiments of the present application, targeted wiping can be performed on the conical tip portion of the nozzle, which improves the cleanliness of the printer nozzle during operation, thereby improving the dirt removal efficiency for the printer nozzle.

With reference to the first aspect or with reference to any one of the above possible implementations of the first aspect, in a fourth possible implementation, the hot bed device is further provided with a power port and a second nozzle wiping device, where the first nozzle wiping device, the second nozzle wiping device, and the power port are located on a same side of the hot bed device. Exemplarily, the second nozzle wiping device is arranged between the first nozzle wiping device and the power port. In the embodiments of the present application, the first nozzle wiping device and the second nozzle wiping device are located on a same side of the hot bed device, such that when the nozzle is being wiped, the nozzle can move in a specific direction to get wiped twice, the movement path of the nozzle is short, and the nozzle wiping efficiency is high.

With reference to the first aspect or with reference to any one of the above possible implementations of the first aspect, in a fifth possible implementation, the first nozzle wiping device includes a first base and a first wiping block, where the first wiping block is connected to the first base, and the first base is connected to the hot bed device. By implementing the embodiments of the present application, when the first nozzle wiping device is worn out, the first nozzle wiping device can be detachably replaced. Moreover, when the first wiping block is worn out, the first wiping block may be replaced without replacement of the first base, so the cost is low.

With reference to the fifth possible implementation of the first aspect, in a sixth possible implementation, a surface of the first wiping block facing the nozzle is provided with a plurality of protrusions. In the embodiments of the present application, the plurality of protrusions have gaps therebetween, and the nozzle rubs back and forth between the gaps between the protrusions, so residual consumables on a conical side surface portion of the nozzle are wiped off.

With reference to the third possible implementation of the first aspect or with reference to the fourth possible implementation of the first aspect, in a seventh possible implementation, the second nozzle wiping device includes a second base and a second wiping block, where the second wiping block is connected to the second base, and the second base is connected to the hot bed device. By implementing the embodiments of the present application, when the second nozzle wiping device is worn out, the second nozzle wiping device can be detachably replaced. Moreover, when the second wiping block is worn out, the second wiping block may be replaced without replacement of the second base, so the cost is low.

With reference to the first aspect, in a first possible implementation, a surface of the second wiping block facing the nozzle is provided with a plurality of holes or a plurality of saw teeth. The nozzle rubs back and forth on the plurality of holes or the plurality of saw teeth, so residual consumables at the conical tip portion of the nozzle are wiped off. By implementing the embodiments of the present application, the wiping efficiency at the tip portion of the nozzle can be improved.

With reference to the seventh possible implementation of the first aspect or with reference to an eighth possible implementation of the first aspect, in a ninth possible implementation, the second wiping block is a metal sheet. By implementing the embodiments of the present application, on the basis of ensuring the wiping efficiency at the tip portion of the nozzle, the durability of the second wiping block is improved. In addition, based on the specific heat capacity characteristics of metal, consumables remaining around the nozzle can be effectively solidified, thereby further improving the nozzle wiping efficiency of the second wiping block.

In a second aspect, the embodiments of the present application provide a 3D printer. The 3D printer includes a base, a nozzle, and the hot bed device according to the first aspect or according to any one of the above possible implementations of the first aspect, where the hot bed device is arranged on a side of the base facing the nozzle, and the hot bed device is slidably connected to the base.

It should be understood that for implementation and beneficial effects of the above aspects of the present application, reference may be made to each other.

### BRIEF DESCRIPTION OF THE DRAWINGS

FIG. 1 is a schematic diagram of an application scenario of a 3D printer according to an embodiment of the present application;
FIG. 2 is a schematic structural diagram of a hot bed device according to an embodiment of the present application;
FIG. 3 is another schematic structural diagram of a hot bed device according to an embodiment of the present application;
FIG. 4 is a schematic structural diagram of a first nozzle wiping device according to an embodiment of the present application;
FIG. 5 is an exploded view of a first nozzle wiping device according to an embodiment of the present application;
FIG. 6 is a schematic structural diagram of a first wiping block according to an embodiment of the present application;
FIG. 7 is another schematic structural diagram of a hot bed device according to an embodiment of the present application;
FIG. 8 is a schematic structural diagram of a second nozzle wiping device according to an embodiment of the present application;
FIG. 9 is an exploded view of a second nozzle wiping device according to an embodiment of the present application;
FIG. 10 is a schematic structural diagram of a second wiping block according to an embodiment of the present application;
FIG. 11 is another schematic structural diagram of a hot bed device according to an embodiment of the present application; and
FIG. 12 is another schematic structural diagram of a hot bed device according to an embodiment of the present application.

### DETAILED DESCRIPTION

Technical solutions in the embodiments of the present application will be clearly and fully described below with reference to the accompanying drawings in the embodiments of the present application.

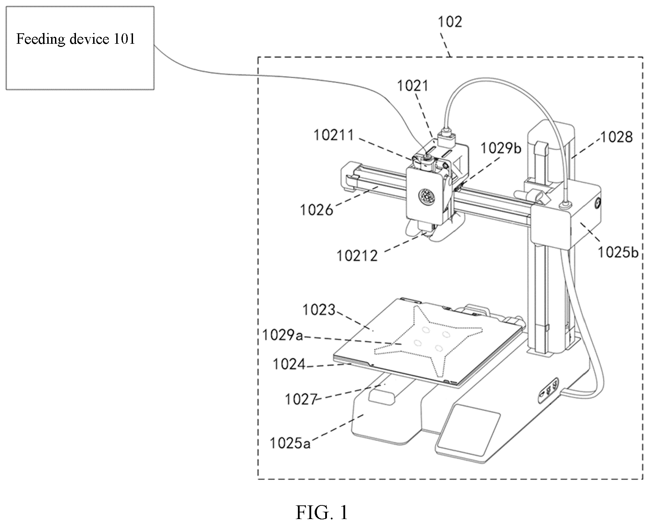

Referring to FIG. 1, FIG. 1 is a schematic diagram of an application scenario of a 3D printer according to an embodiment of the present application. As shown in FIG. 1, a 3D printer 102 is connected to a feeding device 101.

The feeding device 101 may hang a filament spool, and consumables are wound around the filament spool. The feeding device 101 may provide the consumables to the 3D printer 102, or the consumables may be rewound to the filament spool through the feeding device. That is, the feeding device can feed or retract materials. Exemplarily, the feeding device 101 may also identify material information of consumables and send the material information of the consumables to the 3D printer 102.

The 3D printer 102 includes a printing head 1021, where the printing head 1021 includes a filament guide unit 10211, a nozzle 10212, and an extrusion assembly arranged between the filament guide unit 10211 and the nozzle 10212. During the feeding process of the feeding device 101, consumables enter the extrusion assembly after passing through the filament guide unit 10211, and the extrusion assembly provides the consumables to the nozzle 10212. During the retracting process of the feeding device 101, the 3D printer 102 cuts off the consumables in the printing head 1021, and the extrusion assembly conveys the consumables to the feeding device 101.

Optionally, the 3D printer 102 may, for example, cut off consumables between the extrusion assembly and the nozzle 10212 or cut off the consumables in the extrusion assembly. The present application does not limit the position where the 3D printer cuts off consumables.

Exemplarily, as shown in FIG. 1, the 3D printer 102 further includes a print panel 1023, a hot bed device 1024, a base 1025a, and a sliding block 1029a. The hot bed device 1024 is arranged on the side of the base 1025a facing the nozzle 10212, and the hot bed device 1024 has a heating function. The print panel 1023 is arranged on the side of the hot bed device 1024 facing the nozzle 10212, the heat of the hot bed device 1024 may be conducted to the print panel 1023, and the nozzle 10212 may extrude consumables in a molten state on the print panel 1023. Optionally, the 3D printer 102 further includes a base 1025b and a sliding block 1029b. It can be understood that the print panel 1023 may also belong to the hot bed device 1024. For example, the hot bed device 1024 may include a hot bed (not shown in the figure) and the print panel 1023. That is, the hot bed device in the present application may include a hot bed with a heating function, and may further include a hot bed and a print panel located on the hot bed, which is not limited in the present application.

In a specific implementation, the 3D printer may adjust the temperatures of the nozzle 10212 and the hot bed device 1024, adjust the temperature of the nozzle 10212 to heat consumables to a molten state, and adjust the temperature of the hot bed device 1024 to adhere consumables extruded by the nozzle 10212 to the print panel 1023. The printing head 1021 is slidably connected to a first guide rail 1026, and the printing head 1021 is movable along a length direction of the first guide rail 1026, that is, the displacement of the printing head 1021 relative to the print panel 1023 along the length direction of the first guide rail 1026 is achieved. Moreover, the hot bed device 1024 is slidably connected to a second guide rail 1027, and the hot bed device 1024 moves along a length direction of the second guide rail 1027, that is, the displacement of the printing head 1021 relative to the print panel 1023 along the length direction of the second guide rail 1027 is achieved, and the length direction of the second guide rail 1027 is perpendicular to the length direction of the first guide rail 1026. Moreover, the first guide rail 1026 is slidably connected to a third guide rail 1028, and the 3D printer 102 can realize displacement of the printing head 1021 relative to the print panel 1023 in a direction perpendicular to the length of the second guide rail 1027 and a direction perpendicular to the length of the first guide rail 1026 by moving the first guide rail 1026 along the third guide rail 1028. That is, the 3D printer 102 may print a three-dimensional object by implementing three printing paths in directions perpendicular to each other.

In the embodiments of the present application, by arrangement of a nozzle wiping device in the hot bed device of the 3D printer, the nozzle wiping device can be used to wipe off residual consumables around the nozzle, avoiding manual removal of the residual consumables, effectively improving the removal efficiency of the residual consumables around the nozzle, and ensuring high safety.

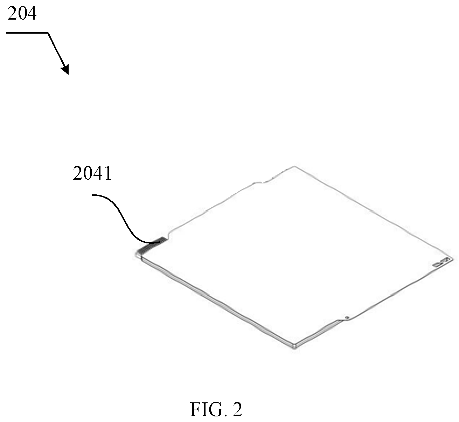

The structure of the hot bed device will be described in detail below with reference to FIGs. 2 to 12.

Referring to FIG. 2, FIG. 2 is a schematic structural diagram of a hot bed device according to an embodiment of the present application. As shown in FIG. 2, the hot bed device 204 includes a hot bed and a print panel located on the hot bed. At least a first nozzle wiping device 2041 is arranged in the hot bed device 204, and the first nozzle wiping device 2041 may be configured to wipe off residual consumables around a nozzle when in contact with the nozzle.

In some feasible implementations, the nozzle is conical in shape, and the first nozzle wiping device 2041 may wipe off residual consumables on a conical side surface portion of the nozzle. By implementing the embodiments of the present application, the first nozzle wiping device can realize cleaning of the conical side surface portion of the nozzle, thereby improving the cleaning efficiency of the nozzle.

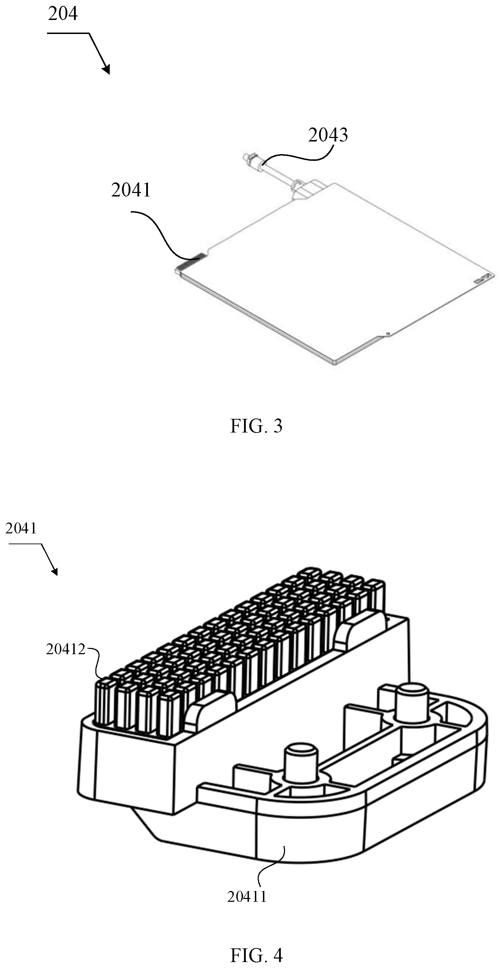

In some feasible implementations, referring to FIG. 3, FIG. 3 is another schematic structural diagram of a hot bed device according to an embodiment of the present application. As shown in FIG. 3, the hot bed device 204 is further provided with a power port 2043, and the power port 2043 may provide a source of heating energy for the hot bed device 204 to heat the hot bed device 204. The first nozzle wiping device 2041 and the power port 2043 may be located on a same side of the hot bed device 204.

By implementing the embodiments of the present application, only one side edge of the hot bed device 204 needs to be processed during production, which improves the production efficiency of the hot bed device 204, and achieves a reasonable and beautiful layout.

Exemplarily, the first nozzle wiping device 2041 may be adhered to a surface of the hot bed device 204, for example, specifically adhered near a top corner of the hot bed device 204. In this case, the first nozzle wiping device 2041 and the power port 2043 are respectively located at a left top corner and a right top corner of the same side of the hot bed device 204.

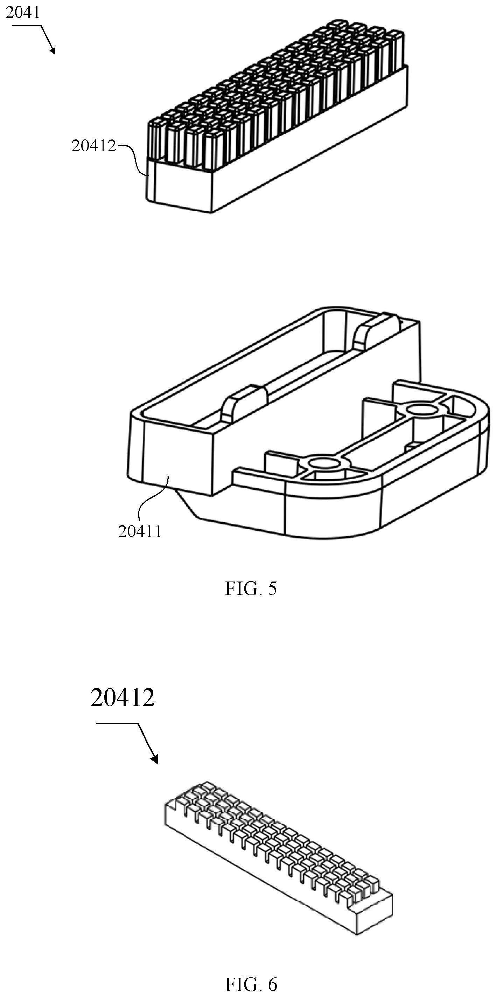

Optionally, in some feasible implementations, referring to FIGs. 4 and 5, FIG. 4 is a schematic structural diagram of a first nozzle wiping device according to an embodiment of the present application, and FIG. 5 is an exploded view of a first nozzle wiping device according to an embodiment of the present application. As shown in FIGs. 4 and 5, a first nozzle wiping device 2041 may include a first base 20411 and a first wiping block 20412. The first wiping block 20412 is connected to the first base 20411, and the first base 20411 is connected to the hot bed device 204. Exemplarily, the first base 20411 may be fixedly connected to the hot bed device through connectors such as screws.

Exemplarily, the first wiping block 20412 may be made of silica gel, and the first base 20411 may be a plastic base. In the process of wiping off residual consumables around the nozzle, the portion that plays a role is the first wiping block 20412, where the first base 20411 and the first wiping block 20412 are detachably connected, for example, in buckled connection, so the first wiping block 20412 can be replaced.

In some feasible implementations, referring to FIG. 6, FIG. 6 is a schematic structural diagram of a first wiping block according to an embodiment of the present application. As shown in FIG. 6, the surface of the first wiping block 20412 facing the nozzle is provided with a plurality of protrusions. The plurality of protrusions have gaps therebetween. Exemplarily, when a 3D printer is ready to print, a nozzle is heated, such that the nozzle extrudes a part of consumables. After the consumables are extruded, the 3D printer may control the nozzle to move above the first wiping block 20412 and rub back and forth between the gaps between the protrusions, so residual consumables around the nozzle are wiped off.

Disclosed in the embodiments of the present application is a hot bed device of a 3D printer. The 3D printer includes a base, a nozzle, a guide rail, and the hot bed device, where the hot bed device is arranged on the side of the base facing the nozzle, and the hot bed device is slidably connected to the base through the guide rail; the hot bed device is provided with a first nozzle wiping device, and the first nozzle wiping device is configured to wipe off residual consumables around the nozzle when in contact with the nozzle. By implementing the embodiments of the present application, manual removal of the residual consumables can be avoided, and the risk of burning users when wiping off the residual consumables around the nozzle is effectively reduced.

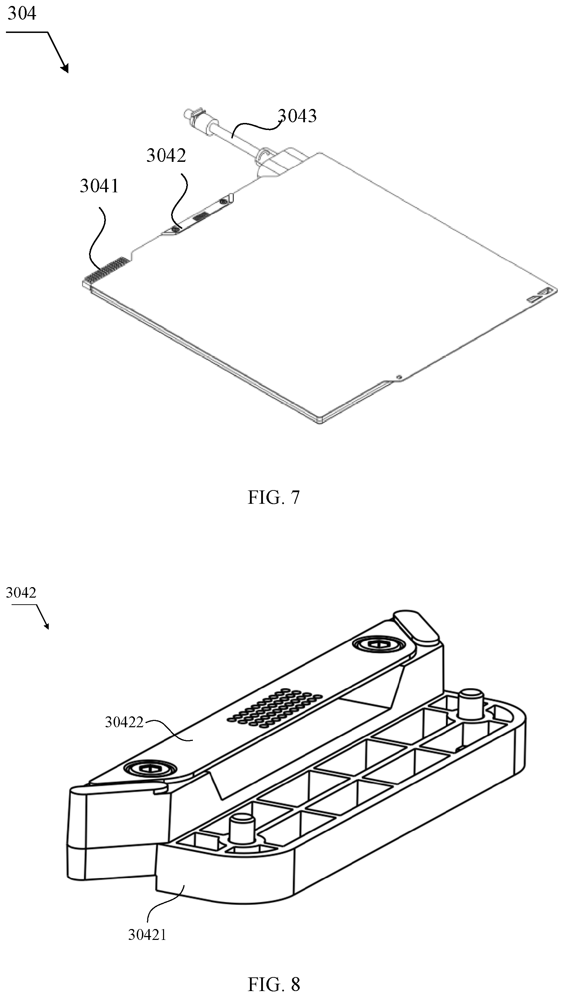

In some feasible implementations, referring to FIG. 7, FIG. 7 is another schematic structural diagram of a hot bed device according to an embodiment of the present application. As shown in FIG. 7, the hot bed device 304 is provided with a first nozzle wiping device 3041 and a second nozzle wiping device 3042.

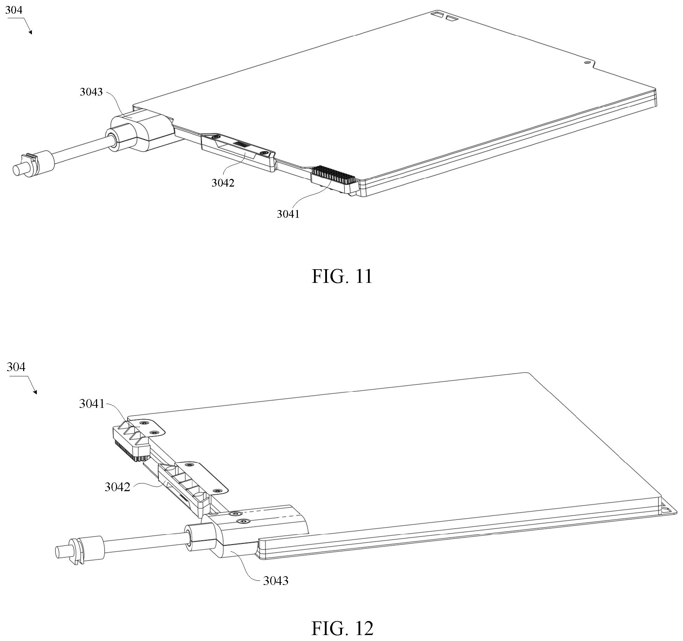

Exemplarily, as shown in FIGs. 11 and 12, the hot bed device 304 may include a hot bed with a heating function.

In some feasible implementations, the nozzle is conical in shape, and the first nozzle wiping device 3041 is configured to wipe off residual consumables on a conical side surface portion of the nozzle when in contact with the nozzle; the second nozzle wiping device 3042 is configured to wipe off residual consumables on a conical tip portion of the nozzle when in contact with the nozzle. In this case, functions of the first nozzle wiping device and the second nozzle wiping device may be different. For the specific implementation of the first nozzle wiping device 3041, reference may be made to the embodiments described above with reference to FIGs. 2 to 6, which will not be repeated here.

Optionally, in some feasible implementations, the hot bed device 304 is further provided with a power port 3043, where the first nozzle wiping device 3041, the second nozzle wiping device 3042, and the power port 3043 are located on the same side of the hot bed device 304, and the second nozzle wiping device 3042 is arranged between the first nozzle wiping device 3041 and the power port 3043, such that only one side edge of the hot bed device 304 needs to be processed during production, which improves the production efficiency of the hot bed device 304, and achieves a reasonable and beautiful layout. Further, since the first nozzle wiping device 3041 and the second nozzle wiping device 3042 are arranged on the same side of the hot bed device 304, a large distance between the first nozzle wiping device 3041 and the second nozzle wiping device 3042 is avoided, and the nozzle can be wiped in multiple stages to improve the wiping efficiency.

FIG. 7 illustrates an example where the second nozzle wiping device 3042 is arranged between the first nozzle wiping device 3041 and the power port 3043. Optionally, the positions of the first nozzle wiping device 3041 and the second nozzle wiping device 3042 may be exchanged.

In some feasible implementations, the first nozzle wiping device 3041 and the second nozzle wiping device 3042 may be made of different materials. Exemplarily, the material of the first nozzle wiping device 3041 may be a heat-resistant material with a flexible structure, and the material of the second nozzle wiping device 3042 may be a material with high heat conduction efficiency.

The nozzle may be provided with a heating module, and a controller of the 3D printer may pre-store a first position coordinate parameter for the first nozzle wiping device 3041 and a second position coordinate parameter for the second nozzle wiping device 3042. After the controller controls the heating module to heat the nozzle, residual consumables around the nozzle are softened. The controller moves a printing head to move the nozzle to the first nozzle wiping device 3041. When the nozzle is in contact with the first nozzle wiping device 3041, the controller controls the printing head to move back and forth at the first nozzle wiping device 3041, and the nozzle may rub back and forth on a first wiping block of the first nozzle wiping device 3041 to complete the wiping of a conical side surface portion of the nozzle, so as to prepare the 3D printer for printing.

Similarly, the controller may move the printing head to move the nozzle to the second nozzle wiping device 3042. When the nozzle is in contact with the second nozzle wiping device 3042, the nozzle may abut against the second nozzle wiping device above the second nozzle wiping device 3042 to cool the nozzle, thereby allowing consumables remaining on the nozzle of the printer to cool and solidify. The controller controls the printing head to move back and forth at the second nozzle wiping device 3042, such that the nozzle may rub back and forth on the second nozzle wiping device to wipe off residual consumables of a conical tip portion of the nozzle, so as to prepare the hot bed of the 3D printer for leveling.

Optionally, in some feasible implementations, the second nozzle wiping device 3042 and the first nozzle wiping device 3041 in the embodiments of the present application are arranged at different positions, and functions of the first nozzle wiping device 3041 and the second nozzle wiping device 3042 may be the same.

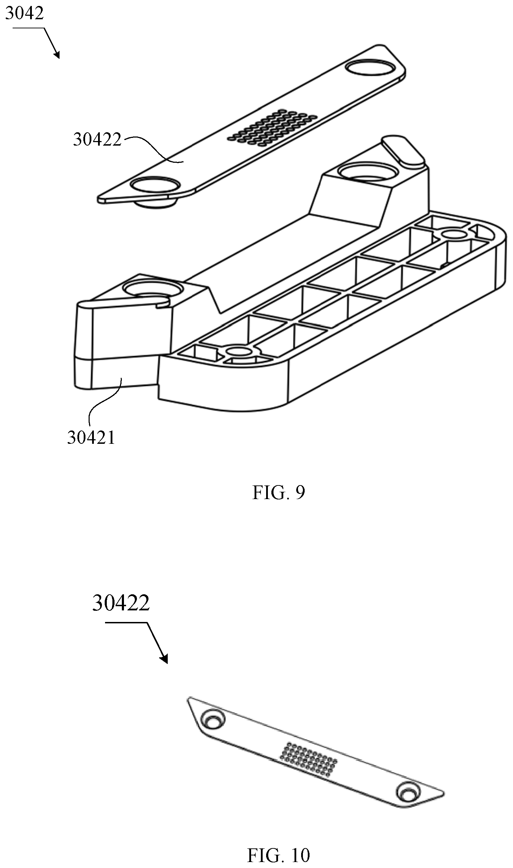

In some feasible implementations, referring to FIGs. 8 and 9, FIG. 8 is a schematic structural diagram of a second nozzle wiping device according to an embodiment of the present application, and FIG. 9 is an exploded view of a second nozzle wiping device according to an embodiment of the present application. As shown in FIGs. 8 and 9, the second nozzle wiping device 3042 may include a second base 30421 and a second wiping block 30422. The second wiping block 30422 is connected to the second base 30421, and the second base 30421 is connected to the hot bed device 304. Exemplarily, the second base 30421 may be fixedly connected to the hot bed device 304 through connectors such as screws.

Exemplarily, the second wiping block 30422 may be made of a metal material, for example, a stainless steel sheet, and the second base 30421 may be a plastic base. In the process of wiping off residual consumables around the nozzle, the portion that plays a role is the second wiping block 30422, where the second base 30421 and the second wiping block 30422 are detachably connected, and the second wiping block 30422 is a consumable and can be replaced.

Further, in some feasible implementations, referring to FIG. 10, FIG. 10 is a schematic structural diagram of a second wiping block according to an embodiment of the present application. As shown in FIG. 10, the surface of the second wiping block 30422 facing the nozzle is provided with a wiping area, and the wiping area may be provided with a plurality of holes or a plurality of saw teeth. Exemplarily, after the nozzle is wiped by the first nozzle wiping device, the 3D printer may control the nozzle to move above the second wiping block 30422 and rub back and forth in the wiping area. Based on the specific heat capacity characteristics of metal, consumables remaining around the nozzle can be effectively solidified, and the plurality of holes or the plurality of saw teeth in the wiping area can wipe off the solidified consumables at the tip portion of the nozzle, thereby further improving the nozzle wiping efficiency of the second wiping block.

In the embodiments of the present application, a first nozzle wiping device and a second nozzle wiping device are provided, where the first nozzle wiping device is configured to wipe off residual consumables on a side surface of a nozzle, and the second nozzle wiping device is configured to wipe off residual consumables at a tip of the nozzle in contact with the hot bed. The first nozzle wiping device is used for cleaning of a 3D printer, and the second nozzle wiping device is used for cleaning of the 3D printer at the hot bed leveling stage. By implementing the embodiments of the present application, residual consumables around the nozzle can be effectively removed.

Certainly, the above embodiments are merely examples. It should be noted that the number of the first nozzle wiping device and the second nozzle wiping device may not be unique, and those skilled in the art may set the first nozzle wiping device and the second nozzle wiping device in any number according to actual needs. Further, the manufacturing materials of the first nozzle wiping device and the second nozzle wiping device may be different or the same, and those skilled in the art may use any material to manufacture the first nozzle wiping device or the second nozzle wiping device according to actual needs. Further, controlling a printer nozzle to be in contact with a nozzle wiping device based on a preset position coordinate parameter is not the only way, and those skilled in the art may use other ways to control a printer nozzle to be in contact with a nozzle wiping device, for example, configuring a camera for a printer nozzle to control the printer nozzle to be in contact with a nozzle wiping device after determining the position of the nozzle wiping device, which is not limited in the embodiments of the present application.

In the embodiments of the present application, by configuring a hot bed device of a 3D printer with a first nozzle wiping device and a second nozzle wiping device for a nozzle, manual wiping of the printer nozzle is avoided, which improves the safety of the three-dimensional printer during operation. At the same time, targeted wiping can be performed on different positions of the nozzle in multiple stages, which improves the cleanliness of the printer nozzle during operation, thereby improving the dirt removal efficiency for the printer nozzle.

It should be noted that the above terms "first" and "second" are merely for descriptive purposes and are not to be construed as indicating or implying relative importance.

What is disclosed above is merely exemplary embodiments of the present application, and certainly is not intended to limit the protection scope of the present application. Therefore, equivalent variations made in accordance with the claims of the present application shall fall within the scope of the present application.

## Claims

1. A hot bed device for a 3D printer, wherein the hot bed device is arranged on a side of a base of the 3D printer facing a nozzle of the 3D printer, and the hot bed device is slidably connected to the base; wherein
the hot bed device is provided with a first nozzle wiping device, the first nozzle wiping device comprises a first wiping block, and the first wiping block is a silica gel wiping block.

2. The hot bed device according to claim 1, wherein the nozzle is conical in shape.

3. The hot bed device according to any one of claims 1 to 2, wherein the hot bed device is further provided with a power port, and the first nozzle wiping device and the power port are located on a same side of the hot bed device.

4. The hot bed device according to any one of claims 1 to 3, wherein the nozzle is conical in shape; the hot bed device is further provided with a second nozzle wiping device.

5. The hot bed device according to any one of claims 1 to 4, wherein the hot bed device is further provided with the power port and a second nozzle wiping device; wherein
the first nozzle wiping device, the second nozzle wiping device, and the power port are located on a same side of the hot bed device.

6. The hot bed device according to claim 5, wherein the second nozzle wiping device is arranged between the first nozzle wiping device and the power port.

7. The hot bed device according to any one of claims 1 to 6, wherein the first nozzle wiping device is adhered to a surface of the hot bed device.

8. The hot bed device according to claim 7, wherein the first nozzle wiping device is adhered near a top corner of the hot bed device.

9. The hot bed device according to any one of claims 1 to 6, wherein the first nozzle wiping device further comprises a first base, wherein the first wiping block is connected to the first base, and the first base is connected to the hot bed device.

10. The hot bed device according to any one of claims 1 to 9, wherein a surface of the first wiping block facing the nozzle is provided with a plurality of protrusions.

11. The hot bed device according to claim 10, wherein the plurality of protrusions have gaps therebetween.

12. The hot bed device according to any one of claims 4 to 5, wherein the second nozzle wiping device comprises a second base and a second wiping block; wherein the second wiping block is connected to the second base, and the second base is connected to the hot bed device.

13. The hot bed device according to claim 12, wherein a surface of the second wiping block facing the nozzle is provided with a plurality of holes or a plurality of saw teeth.

14. The hot bed device according to any one of claims 12 to 13, wherein the second wiping block is a metal sheet.

15. A 3D printer, wherein the 3D printer comprises a base, a nozzle, and the hot bed device of the 3D printer according to any one of claims 1 to 14, wherein the hot bed device is arranged on a side of the base facing the nozzle, and the hot bed device is slidably connected to the base.
